# FASCICULE DE BREVET EUROPEEN

(11) **EP 2 403 737 B1**
(45) Date de publication et mention de la délivrance du brevet: **05.09.2012**
(21) Numéro de dépôt: 10709886.5
(22) Date de dépôt: 18.02.2010
(51) Int. Cl.: B60R 13/02, B60R 21/04

(54) **STRUCTURE DE VEHICULE SECURISEE**
SICHERE FAHRZEUGSTRUKTUR
SECURE VEHICLE STRUCTURE

(30) Priorité: 04.03.2009 FR 0951348
(43) Date de publication de la demande: 11.01.2012
(73) Titulaire: Peugeot Citroën Automobiles Société Anonyme, 78140 Vélizy Villacoublay (FR)
(72) Inventeur: COULOT, Mickaël, 91300 MASSY (FR)
(74) Mandataire: Fosse, Danièle
(86) Numéro de dépôt international: PCT/FR2010/050278
(87) Numéro de publication internationale: WO 2010/100359

(56) Documents cités:
- EP-A- 0 736 421
- GB-A- 2 318 551
- US-A- 6 049 952
- US-B1- 6 333 515

## Description

Le domaine technique de l'invention concerne des structures de véhicules sécurisées, prévues pour se déformer en cas de choc avec un obstacle extérieur, sans blesser les occupants de ces véhicules. Plus précisément, l'invention se rapporte à une structure de véhicule, dont la déformation, sous l'effet d'un choc latéral, est contrôlée, pour éviter que ladite structure n'entre en contact avec l'un des occupants et ne le blesse. L'invention est particulièrement adaptée aux véhicules automobiles, dont la structure est dotée de pieds milieu, la déformation de ces pieds milieu, en cas de choc latéral, pouvant conduire à leur intrusion dans l'habitacle, et être critique vis-à-vis des occupants dudit véhicule.

Pour une meilleure compréhension de l'invention, il est utile de signaler que l'axe X correspond à un axe longitudinal du véhicule, l'axe Y à un axe transversal dudit véhicule et l'axe Z à un axe vertical.

Les structures de véhicules aptes à se déformer sous l'effet d'un choc latéral, existent et ont déjà fait l'objet de brevets. Une telle structure est décrite dans US6049952A selon le préambule de la revendication 1. On peut, en plus, citer le brevet US5938273, qui se rapporte à une structure de véhicule automobile, dotée de deux pieds milieu, présentant chacun un corps nervuré, conçu pour se déformer et amortir un choc latéral. Ces pieds milieu ont donc une fonction exclusivement d'amortissement par l'intermédiaire d'une géométrie destinée à faciliter leur déformation.

Les structures de véhicules selon l'invention, sont dotées de pieds milieu, qui sont des pièces creuses délimitées par une peau extérieure et une garniture intérieure, fixée sur ladite peau extérieure par un système de pattes repliées, insérées dans des logements de ladite peau. En cas de choc latéral, le pied milieu a tendance à se déformer au niveau de sa partie basse, par pliure vers l'intérieur de l'habitacle, cette pliure ayant pour conséquence d'exercer une traction vers le bas de la partie supérieure de la garniture, entrainant la sortie instantanée des pattes hors de leur logement. Cette sortie s'accompagne simultanément d'un déplacement de la garniture vers l'intérieur de l'habitacle, au niveau desdites pattes, en direction de l'occupant placé le plus proche dudit pied, tout en poursuivant son faible coulissement vertical le long de la peau. Autrement dit, lors d'un choc latéral, les pattes viennent s'insérer entre la structure du véhicule et l'occupant, créant ainsi une situation dangereuse avec un risque accru d'impact de ces pattes sur l'occupant. L'invention vise à éviter cette intrusion dangereuse des pattes vers l'intérieur de l'habitacle, pour limiter les risques de blessure, voire les annuler, en proposant un système simple de guidage des pattes le long de la peau du véhicule.

La présente invention a pour objet une structure de véhicule sécurisée, comprenant sur chaque coté, de part et d'autre de l'axe longitudinal, au moins un pied sensiblement vertical, délimité chacun par une peau extérieure et une garniture interne, ces deux éléments étant reliés l'un à l'autre en partie supérieure de pied, par l'intermédiaire d'au moins un organe d'accrochage d'un élément coopérant avec au moins un logement de l'autre élément. La principale caractéristique d'une structure de véhicule selon l'invention, est que chaque logement est constitué par un trou allongé, dont l'axe longitudinal est sensiblement vertical, la longueur dudit trou étant dimensionnée pour que l'organe d'accrochage puisse coulisser verticalement en cas de choc latéral. Habituellement, en cas de choc latéral, le pied se plie en partie basse, provoquant un effort de traction vers le bas, sur la partie haute de la garniture par rapport à la peau, induisant un désalignement de ces deux éléments. Ce coulissement de la garniture le long de la peau, entraine généralement la sortie des organes d'accrochage de leur logement, provoquant l'écartement de la garniture par rapport à la peau, car lesdits organes viennent alors en butée contre la peau. Ces organes jouent alors un rôle d'entretoise entre la peau du véhicule et l'occupant, rendant le pied dangereux pour cet occupant du véhicule, placé à proximité dudit pied. Le rallongement des trous selon une direction verticale, favorise le coulissement libre de la garniture le long de la peau selon une direction sensiblement verticale, car il permet d'éviter la sortie des éléments d'accrochage de leur logement, lesdits éléments pouvant se déplacer le long de ces trous sans être déviés latéralement vers l'occupant. De façon avantageuse, pour une structure de véhicule possédant traditionnellement des pieds avant, des pieds milieu et des pieds arrière, seuls les pieds milieu sont concernés par les aménagements précédemment décrits.

Avantageusement, l'organe d'accrochage est solidaire de la garniture, le trou lui correspondant étant réalisé dans la peau extérieure.

De façon préférentielle, la structure possède deux organes d'accrochage sous la forme de deux pattes ayant sensiblement une forme en L, dont le premier segment se retrouve en position horizontale et dont le deuxième segment se retrouve en position verticale.

Préférentiellement, le premier segment est solidarisé à la partie haute de la garniture, et vient en butée contre le bord supérieur du trou allongé lui correspondant et situé sur la peau, le deuxième segment possédant une extrémité libre située au dessus du premier segment.

De façon avantageuse, les deux pattes sont identiques et sont alignées suivant une direction horizontale.

Avantageusement, la longueur de chaque trou est comprise entre 2 et 12 centimètres.

Selon un mode de réalisation préféré de l'invention, la longueur de chaque trou est comprise entre 5 et 10 centimètres.

De façon préférentielle, chaque trou a un contour rectangulaire. Cependant, il peut revêtir d'autres formes, l'essentiel étant qu'il soit allongé selon une direction verticale pour assurer une course rectiligne des pattes selon cette même direction verticale.

L'invention se rapporte également à un véhicule automobile, caractérisé en ce qu'il possède une structure conforme à l'invention.

Les structures de véhicule selon l'invention, présentent l'avantage d'être sécurisées vis-à-vis des occupants de celui-ci, tout en conservant un encombrement constant, puisque les pieds bénéficient d'aménagements locaux, par enlèvement de matière. De plus, elles ont l'avantage de ne pas entraîner de surcoûts majeurs lors de la fabrication des véhicules, dans la mesure où les modifications structurelles apportées aux pieds sont mineures, et faciles à mettre en oeuvre.

On donne ci-après une description détaillée d'un mode de réalisation préféré d'une partie avant de véhicule selon l'invention, en se référant aux figures 1 à 3.
- La figure 1 est une vue en perspective d'un pied milieu appartenant à une structure de véhicule automobile selon l'état de la technique, et réagissant à un choc latéral.
- La figure 2 est une vue zoomée de la partie supérieure du pied milieu de la figure 1 réagissant à un choc latéral.
- La figure 3 est une vue zoomée de la partie supérieure d'un pied milieu appartenant à une structure de véhicule automobile selon l'invention.

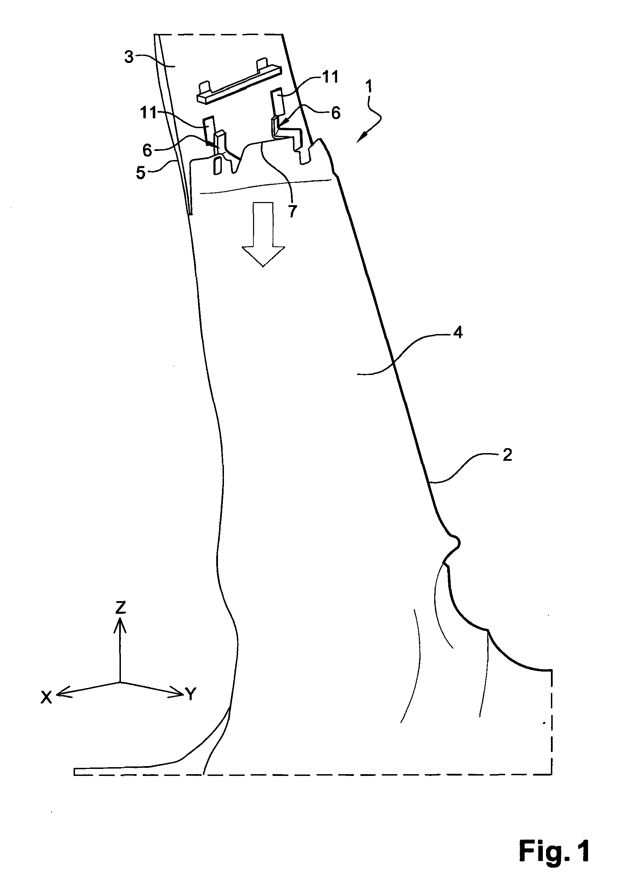

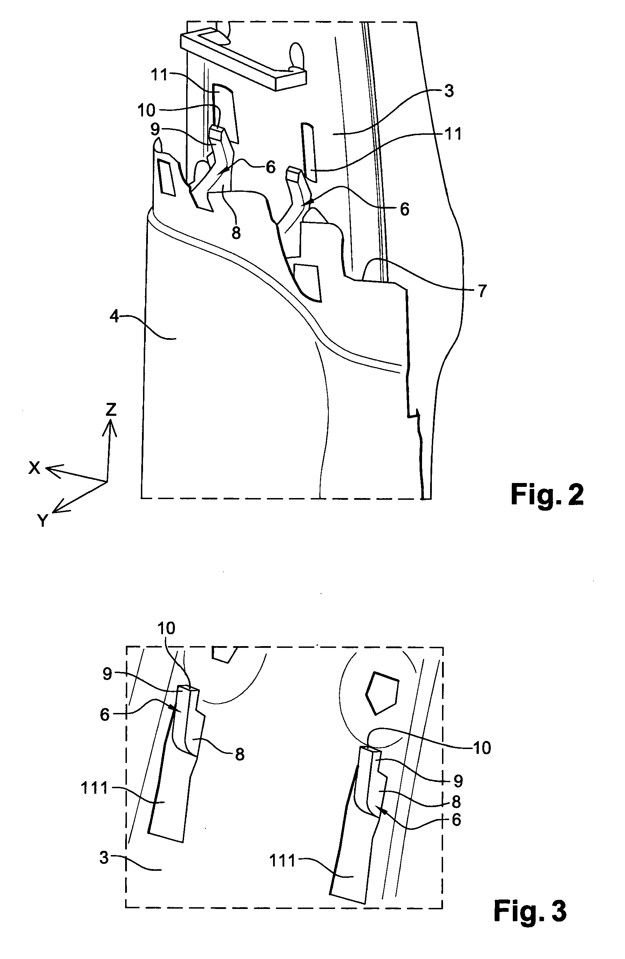

En se référant aux figures 1 et 2, une structure de véhicule automobile appartenant à l'état de la technique existant, possède deux pieds milieu 1, situés de part et d'autre de son axe longitudinal, en position approximativement centrale dans l'habitacle, et implantés selon une direction verticale. Dans le cas d'un choc latéral avec un obstacle extérieur au véhicule, le pied milieu 1 a tendance à se déformer vers l'intérieur dudit habitacle, en se pliant en deux au niveau de sa partie basse 2 selon une direction Y transversale du véhicule. Un pied milieu 1 est une pièce creuse, classiquement délimitée par une peau extérieure 3 et une garniture interne 4 pouvant être en plastique, ladite garniture 4 étant rivée à ladite peau 3 en partie supérieure 5 de pied 1, par l'intermédiaire de deux pattes 6 incurvées. Ces deux pattes 6 sont solidaires de la garniture 4 en étant implantées au niveau de son extrémité supérieure 7, lesdites pattes 6 étant identiques et alignées suivant une direction horizontale du véhicule. Chaque patte 6 a sensiblement une forme en L, dont le premier segment 8 se retrouve en position horizontale, et dont le deuxième segment 9 se retrouve en position verticale, ledit deuxième segment 9 possédant une extrémité libre 10 située au dessus dudit premier segment 8. Ce premier segment 8 est solidarisé à l'extrémité supérieure 7 de la garniture 4. La peau extérieure 3 du pied 1, présente deux trous 11 alignés suivant une direction horizontale, et dont l'écartement correspond à la distance de séparation des deux pattes 6. Lorsque la garniture 4 est fixée à la peau 3, le premier segment horizontal 8 de chaque patte 6 vient en butée contre le bord supérieur du trou 11. de la peau lui correspondant, le deuxième segment 9 émergeant de l'autre coté de la peau 3, par rapport à la garniture 4. De façon plus précise, chaque patte 6 en forme de L, présente un coude à angle droit au niveau de sa partie interne, permettant de distinguer deux plans perpendiculaires générant une cassure nette, et un coude de forme arrondie au niveau de sa partie externe, permettant une transition progressive entre les deux segments 8,9, chaque patte 6 étant au contact du bord supérieur du trou 11 lui correspondant, par l'intermédiaire de son coude interne. En cas de choc latéral, en partie 2 basse de pied 1, il se produit une pliure dudit pied 1, qui s'étend vers l'intérieur de l'habitacle, engendrant un effort de traction vers le bas, de la partie supérieure 7 de la garniture 3. La garniture 4 amorce alors, instantanément, un déplacement latéral vers l'intérieur de l'habitacle, qui l'éloigne de la peau 3, en raison de la forme arrondie des pattes 6, tout en poursuivant son mouvement de coulissement vertical vers le bas, le long de ladite peau 3. Comme illustré sur la figure 2, la garniture 4, qui s'est décrochée de la peau 3, et qui a effectué son déplacement latéral, s'est rapprochée de l'occupant du véhicule, en présentant deux points durs matérialisés par les deux pattes 6, qui glissent sur la peau 3, ces deux pattes 6 étant susceptibles de créer ou d'accroître des blessures potentielles sur l'occupant.

En se référant à la figure 3, une structure de véhicule sécurisée selon l'invention, se différencie des structures de véhicule existantes, par le fait que les trous 111 de la peau extérieure 3 coopérant avec les pattes 6 de la garniture interne 4 pour former les pieds milieu, sont allongés selon une direction verticale. En effet, il est important de ménager un espace libre sous les pattes 6, lorsque la garniture 4 est fixée à la peau extérieure 3, pour que la partie supérieure 7 de ladite garniture 4 puisse coulisser librement selon une direction verticale le long de la peau 3, en cas de choc latéral sur la partie basse 2 du pied 1, sans subir de déplacement latéral dû à la sortie des pattes 6 de leurs trous 111. Pour ces structures avant de véhicule selon l'invention, le segment horizontal 8 de chaque patte 6 se retrouve en butée contre le bord supérieur de chaque trou 111, et, en cas de choc latéral en partie basse 2 de pied 1, l'extrémité 7 supérieure de la garniture effectue un mouvement vertical vers le bas, les pattes 6 coulissant le long de leur trou 111 respectif. Pour être pleinement efficace, la longueur des trous doit être supérieure à 5 cm.

## Revendications

1. Structure de véhicule sécurisée, comprenant sur chaque coté, de part et d'autre de l'axe longitudinal, au moins un pied (1) sensiblement vertical, délimité chacun par une peau extérieure (3) et une garniture interne (4), ces deux éléments (3,4) étant reliés l'un à l'autre en partie supérieure (5) de pied (1), par l'intermédiaire d'au moins un organe d'accrochage (6) d'un élément (3,4) coopérant avec au moins un logement (11) de l'autre élément (3,4), chaque logement étant constitué par un trou allongé (111), dont l'axe longitudinal est sensiblement vertical, la longueur dudit trou (111) étant dimensionnée pour que l'organe d'accrochage (6) puisse coulisser verticalement en cas de choc latéral, l'organe d'accrochage (6) étant solidaire de la garniture (4) et le trou (111) lui correspondant étant réalisé dans la peau extérieure (3), **caractérisé en ce qu'**elle possède deux organes d'accrochage sous la forme de deux pattes (6) ayant sensiblement une forme en L, dont le premier segment (8) se retrouve en position horizontale et dont le deuxième segment (9) se retrouve en position verticale.

2. Structure de véhicule selon la revendication 1, **caractérisé en ce que** le premier segment (8) est solidarisé à la partie haute (7) de la garniture (4), et vient en butée contre le bord supérieur du trou allongé (111) lui correspondant et situé sur la peau (3), et **en ce que** le deuxième segment (9) possède une extrémité libre (10) située au dessus du premier segment (8).

3. Structure de véhicule selon l'une quelconque des revendications 1 ou 2, **caractérisé en ce que** les deux pattes (6) sont identiques et sont alignées suivant une direction horizontale.

4. Structure de véhicule selon l'une quelconque des revendications précédentes, **caractérisée en ce que** la longueur de chaque trou (111) est comprise entre 2 et 12 centimètres.

5. Structure de véhicule selon la revendication 4, **caractérisée en ce que** la longueur de chaque trou (111) est comprise entre 5 et 10 centimètres.

6. Structure selon l'une quelconque des revendications précédentes, **caractérisé en ce que** chaque trou (111) a un contour rectangulaire.

7. Véhicule automobile **caractérisé en ce qu'**il possède une structure conforme à l'une des revendications 1 à 6.

## Claims

1. Protected vehicle structure, comprising on either side, on either side of the longitudinal axis, at least one substantially vertical leg (1), each delimited by an external skin (3) and an internal lining (4), these two elements (3, 4) being connected to each other at the top part (5) of the leg (1), by means of at least one attachment member (6) of an element (3, 4) cooperating with at least one housing (11) in the other element (3, 4), each housing consisting of an elongate hole (111), the longitudinal axis of which is substantially vertical, the length of said hole (111) being sized so that the attachment member (6) can slide vertically in the case of lateral impact, the attachment (6) being secured to the lining (4) and the hole (111) corresponding thereto being produced in the external skin (3), **characterised in that** it has two attachment members in the form of two lugs (6) approximately in an L shape, the first segment (8) of which is situated in the horizontal position and the second segment (9) of which is situated in the vertical position.

2. Vehicle structure according to claim 1, **characterised in that** first segment (8) is secured to the top part (7) of the lining (4), and comes into abutment against the top edge of the elongate hole (111) corresponding thereto and situated on the skin (3), and **in that** the second segment (9) has a free end (10) situated above the first segment (8).

3. Vehicle structure according to either one of claims 1 or 2, **characterised in that** the two lugs (6) are identical and are aligned in a horizontal direction.

4. Vehicle structure according to any one of the preceding claims, **characterised in that** the length of each hole (111) is between 2 and 12 centimetres.

5. Vehicle structure according to claim 4, **characterised in that** the length of each hole (111) is between 5 and 10 centimetres.

6. Structure according any one of the preceding claims, **characterised in that** each hole (111) has a rectangular contour.

7. Motor vehicle, **characterised in that** it has a structure according to one of claims 1 to 6.

## Patentansprüche

1. Gesicherter Fahrzeugaufbau, umfassend auf jeder Seite, beiderseits der Längsachse, wenigstens eine Säule (1), die im Wesentlichen senkrecht ist und jeweils von einer Außenschale (3) und einer Innenverkleidung (4) begrenzt ist, wobei diese zwei Elemente (3, 4) im oberen Teil (5) der Säule (1) miteinander verbunden sind, und zwar mit Hilfe wenigstens eines Einhakorgans (6) eines Elements (3, 4), das mit wenigstens einer Ausnehmung (11) des anderen Elements (3, 4) zusammenwirkt, wobei jede Ausnehmung von einem länglichen Loch (111) gebildet wird, dessen Längsachse im Wesentlichen senkrecht verläuft, wobei die Länge des Lochs (111) so bemessen ist, dass sich das Einhakorgan (6) bei einem seitlichen Aufprall senkrecht verschieben kann, wobei das Einhakorgan (6) mit der Verkleidung (4) fest verbunden ist und das Loch (111), welches ihm zugeordnet ist, in der Außenschale (3) ausgeführt ist, **dadurch gekennzeichnet, dass** er zwei Einhakorgane in Form von zwei Klauen (6) umfasst, die im Wesentlichen eine L-Form aufweisen, deren erstes Segment (8) in waagrechter Position angeordnet ist und deren zweites Segment (9) in senkrechter Position angeordnet ist.

2. Fahrzeugaufbau nach Anspruch 1, **dadurch gekennzeichnet, dass** das erste Segment (8) am oberen Teil (7) der Verkleidung (4) befestigt ist und an den oberen Rand des länglichen Lochs (111), das ihm zugeordnet ist und sich auf der Schale (3) befindet, anschlägt, und dadurch, dass das zweite Segment (9) ein freies Ende (10) aufweist, das sich über dem ersten Segment (8) befindet.

3. Fahrzeugaufbau nach einem der Ansprüche 1 oder 2, **dadurch gekennzeichnet, dass** die zwei Klauen (6) identisch sind und gemäß einer waagrechten Richtung ausgerichtet sind.

4. Fahrzeugaufbau nach einem der vorhergehenden Ansprüche, **dadurch gekennzeichnet, dass** die Länge jedes Lochs (111) zwischen 2 und 12 Zentimeter beträgt.

5. Fahrzeugaufbau nach Anspruch 4, **dadurch gekennzeichnet, dass** die Länge jedes Lochs (111) zwischen 5 und 10 Zentimeter beträgt.

6. Aufbau nach einem der vorhergehenden Ansprüche, **dadurch gekennzeichnet, dass** jedes Loch (111) einen rechteckigen Umriss aufweist.

7. Kraftfahrzeug, **dadurch gekennzeichnet, dass** es einen Aufbau nach einem der Ansprüche 1 bis 6 umfasst.
